# EUROPÄISCHE PATENTSCHRIFT

(11) **EP 0 946 236 B1**
(45) Veröffentlichungstag und Bekanntmachung des Hinweises auf die Patenterteilung: **15.05.2002**
(21) Anmeldenummer: 97942942.0
(22) Anmeldetag: 17.09.1997
(51) Int. Cl.: B01D 15/08

(54) **VORRICHTUNG UND VERFAHREN AUF HPLC-BASIS ZUR TRENNUNG HOCHKOMPLEXER SUBSTANZGEMISCHE**
HPLC-BASED DEVICE AND METHOD FOR SEPARATING HIGH COMPLEX SUBSTANCE MIXTURES
DISPOSITIF ET PROCEDE FAISANT APPEL A LA CHROMATOGRAPHIE LIQUIDE A HAUTE PERFORMANCE (HPLC) POUR LA SEPARATION DE MELANGES DE SUBSTANCES HAUTEMENT COMPLEXES

(30) Priorität: 25.09.1996 DE 19641210; 25.09.1996 DE 29617376 U
(43) Veröffentlichungstag der Anmeldung: 06.10.1999
(73) Patentinhaber: SEPIAtec GmbH, 12487 Berlin (DE)
(72) Erfinder: GUMM, Holger, D-12503 Berlin (DE); MÜLLER-KUHRT, Lutz, D-14089 Berlin (DE)
(74) Vertreter: Gulde, Klaus W., Dipl.-Chem.
(86) Internationale Anmeldenummer: EP9705093
(87) Internationale Veröffentlichungsnummer: WO9813118

(56) Entgegenhaltungen:
- DE-A- 3 224 495
- US-A- 4 454 043
- US-A- 4 724 081
- US-A- 4 806 250
- US-A- 5 443 734

## Beschreibung

Die Erfindung bezieht sich auf eine Vorrichtung und ein Verfahren auf HPLC-Basis zur Trennung hochkomplexer Substanzgemische.

Mehr als ein Drittel der zur Zeit am Markt befindlichen Arzneimittel enthalten Wirkstoffe, die die Natur zur Verfügung gestellt hat, d.h. sie wurden aus Pflanzen oder Mikroorganismen isoliert, oder aber zumindest auf dieser Basis modifiziert.

Trotz dieser relativ hohen Anzahl an biologisch aktiven Substanzen, die die Natur zur Verfügung hat, hat man sich weltweit bisher mehr auf die chemische Synthese als auf den sogenannten Naturstoffpool konzentriert. In den letzten Jahren wurden jedoch neue Wirkstoffe entdeckt, die von der Natur geschaffen wurden, und dadurch erlebt die Naturstoffchemie bzw. Naturstoffbiotechnologie eine Renaissance.

Gleichzeitig mit der Entdeckung bzw. Herstellung neuer Wirkstoffe erfolgte eine schnelle Entwicklung auf dem Sektor der Testsystemkapazitäten. Während derartige biologische Assays zur Auffindung neuer potentieller Wirkstoffe noch vor Jahren einige 100 mg Substanz erforderlich waren und damit häufig lediglich nur geringe Durchsätze von Tests pro Jahr möglich waren, stellt sich die Situation gegenwärtig grundlegend anders dar. Infolge von Testdesigns, die z.B. die Hemmung eines spezifischen Enzyms als Maß für die biologische Aktivität annehmen, lassen sich miniaturisierte Testautomaten realisieren, mit denen sich durchaus eine Million Substanzen pro Jahr bei gleichzeitig niedrigstem Substanzverbrauch untersuchen lassen. Das Vorhandensein dieser enormen Testsystemkapazitäten kommt der Naturstofforschung entgegen, denn von den aus Pflanzen oder mikrobiellen Fermentationen isolierten reinen Naturstoffen stehen häufig nur wenige Milligramm zur Verfügung, solange eine besondere biologische Aktivität noch nicht nachgewiesen werden konnte.

Obwohl bereits eine große Zahl von Naturstoffen bekannt sind, muß man davon ausgehen, daß die Natur noch eine viel größere Anzahl von Substanzen bereithält, die bisher unbekannt sind, so daß man an einem Hochdurchsatzscreening von einer großen Zahl pflanzlicher und mikrobieller Rohextrakte nicht vorbeikommt.

Die Prüfung natürlicher Extrakte erfordern allerdings eine langwierige Prozedur der Vorreinigung, Vortrennung, Zwischen- und Feinreinigung, die immer wieder unterbrochen werden müssen durch Testung auf biologische Aktivität. Diese Vorgehensweise erfordert einen hohen zeitlichen, personellen sowie logistischen Aufwand und führt darüberhinaus vielfach zu nicht weiter verfolgenswerten chemischen Substanzen.

In Anbetracht des Kostendruckes der aus dem Gesundheitswesen in die forschenden Einrichtungen hineingetragen wird, führen derartige Zeitverluste zu einer immer stärkeren Benachteiligung der auf der Naturstofforschung basierenden Forschung und Entwicklung. Pflanzliche und mikrobielle Extrakte sind hochkomplexe Substanzgemische. Sie enthalten in großer Zahl sowohl extrem polare als auch unpolare Stoffe. Die Auftrennung dieser Gemische ist prinzipiell mit chromatischen Verfahren möglich. Allerdings ist der zeitliche Aufwand der Trennung mit den bisher bekannten chromatographischen Vorrichtung, z.B. HPLC-Anlagen, unvertretbar hoch.

Im BEO-Jahresbericht '94 des Bundesministeriums für Bildung, Wissenschaft, Forschung und Technologie, Seiten 413 und 414, ist eine HPLC-Anlage zur Naturstoffisolierung beschrieben, die pflanzliche und mikrobielle Extrakte grob- und feinfraktionieren soll.

Die Anlage weist folgende Nachteile auf:
- Die Zuschaltung hier genannter Fraktionssammelsäulen erfolgt über 12-Wege-Ventile, deren Einsatz bei präparativen Anwendungen sehr kostenaufwendig ist. Die hier erforderliche Häufigkeit der Schaltungen führt zu einem schnelleren Verschleiß von Bauteilen und Dichtungen.
- Ein variabler Einsatz entsprechend der zu trennenden Gemische durch Erweiterungen oder auch Verringerung der Anzahl der Säulen ist nicht möglich, d.h., ein modularer Aufbau der Anlage ist aufgrund dieser Konstruktion nicht durchführbar.
- Die große Anzahl von Fraktionssammelsäulen führt zu einer zu langen Laufzeit und zu einem hohen Lösungsmittelverbrauch.
- Ein kostengünstiger und zeitsparender Roll-over-Betrieb ist nicht durchführbar.
- Die hier vorgesehene isokratische Trennung im zweiten Trennschritt führt ebenfalls zu einer nachteiligen Verlängerung der Laufzeit.

Der Erfindung liegt nun die Aufgabe zugrunde eine HPLC-Anlage anzubieten, die vollautomatisch in kürzester Zeit hochkomplexe Substanzgemische soweit auftrennt, daß seine Bestandteile nahezu rein vorliegen, die dann einem Testsystem zugeführt werden können.

Die Lösung der Aufgabe erfolgt mit einer Vorrichtung und einem Verfahren auf HPLC-Basis gemäß der Ansprüche 1 und 20.

Bevorzugte Ausführungsformen sind in den abhängigen Ansprüchen 2-21 und 23-30 zufinden.

Die erfindungsgemäß zugrunde gelegte Technologie der Auftrennung der Extrakte ist die Hochdruckflüssig-Chromatographie, die in der Lage ist, sowohl relativ polare als auch unpolare Verbindungen zu trennen. Aufgrund der hohen Anzahl von Substanzen in einem komplexen Substanzgemisch wie z.B. in pflanzlichen und mikrobiellen Extrakten, ist die Trennung in einem Schritt nicht möglich. Es ist vielmehr die erfindungsgemäße Kombination mehrerer Trennsäulensysteme erforderlich, um in vertretbarer Zeit eine Auftrennung zu erreichen.

Die Erfindung weist verschiedene Vorteile auf. So ermöglicht die Erfindung in einer Anlage eine Grob- und eine Feintrennung vorzunehmen und zwischenzeitlich abgetrennte Fraktionen abrufbereit auf festen Phasen zu speichern, so daß innerhalb kürzester Zeit mittels der softwaregesteuerten Vorrichtung eine praktisch vollständige Auftrennung aller Substanzfraktionen erreicht werden kann. Dadurch ist es denkbar, daß bei günstiger Infrastruktur, also das Vorhandensein entsprechender Testsysteme verbunden mit einer Strukturaufklärung innerhalb von 2 bis 3 Tagen eine Identifizierung der wirksamen Komponente eines Extraktes zu ermöglichen. Das bedeutet eine extreme Beschleunigung des Wirkstoffindungsprozesses, der ausgehend von Naturstoffgemischen wie pflanzliche oder mikrobielle Extrakte üblicherweise Monate dauert. Vorteilhafterweise weist die erfindungsgemäße Vorrichtung einen modularen Aufbau auf, der Erweiterungen in Abhängigkeit von der Komplexität zu trennender Substanzgemische ermöglicht.

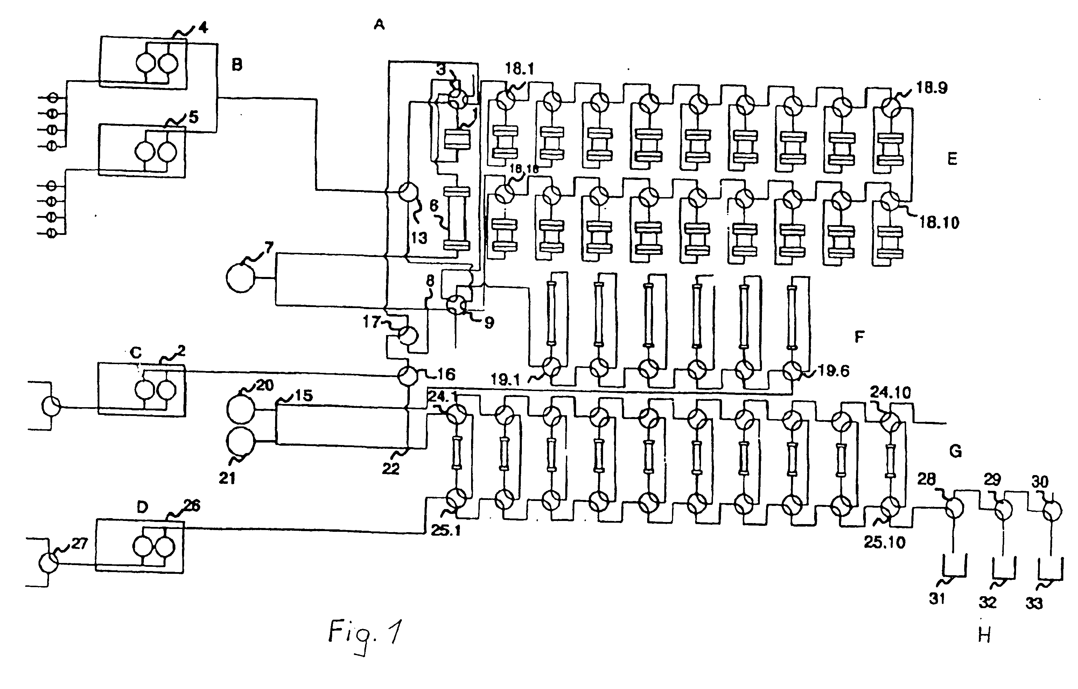

Die Erfindung wird anhand einer Zeichnung näher erläutert.
Es zeigt
- Fig. 1: den Aufbau und Ablaufschema der Vorrichtung.

Das zu trennende Multikomponent-Gemisch (z.B. Pflanzenextrakt, mikrobieller Extrakt usw.) wird in Methanol gelöst und mit RP-4-Material (Korngröße ca. 40 µm) in folgendem Verhältnis 1 Massenteil Extrakt zu 3 Massenteilen RP-4-Material versetzt. Von diesem Gemisch wird das Lösungsmittel am Rotationsverdampfer entfernt, so daß eine rieselfähige Mischung aus Extrakt und RP-Material entsteht. Die Mischung wird in eine Aufgabesäule 1 trocken verfüllt und in die Trennsäuleneinheit A eingebaut.

Mit einer Pumpe 2 und als Eluent Wasser wird über die 3-Wege-Ventile 16, 17 und über ein 6-Wege-Ventil 3 die Luft aus der trockenverfüllten Aufgabesäule 1 entfernt. Wenn die Luft entfernt ist, wird das Trennprogramm gestartet. Das Trennprogramm wird über eine Software gesteuert.

Mit einer Pumpe 4 und einer Pumpe 5 der Pumpeinheit B wird ein Gradient von 0% bis 100% des mit der Pumpe 5 geförderten Laufmittels bzw. Elemente mit einer Laufzeit von 60 min gefahren, wobei es sich bei Pumpe 4 um eine wäßrige Puffer-Lösung und bei Pumpe 5 um Methanol handelt. Die Komponenten des Extraktes werden in Abhängigkeit ihrer Polarität von der Aufgabesäule 1 über das 6-Wege-Ventil 3 auf die Trennsäule 6 gespült. Die Trennsäule 6 ist mit RP-4-Material gefüllt. In einem UV-Detektor 7 werden die Komponenten detektiert und mit der Software aufgezeichnet. Die Komponenten gelangen zu einem T-Stück 8, wo über die Pumpe 2 und die 3-Wege-Ventile 16, 17 Wasser zum Eluent dosiert und dadurch die Polarität der Lösung erhöht wird. Danach gelangt dieses Eluat über ein 6-Wege-Ventil 9 zu einer Fraktionssäuleneinheit E, die aus 18 Fraktioniersäulen besteht.

Die Fraktioniersäulen der Fraktioniersäuleneinheit E sind mit verschiedenen Sorbentien gefüllt, an denen durch Festphasenextraktion die Komponenten extrahiert werden.

Jede Fraktioniersäule wird für einen Zeitraum von 3 - 4 min geschaltet. Die Fraktioniersäulen werden über jeweilige 4-Wege-Ventile 18.1 bis 18.18 in den Eluentenstrom geschaltet. Dadurch wird der 60-minutige Gradient in 18 Fraktionen aufgeteilt. Das komponentenfreie Eluat gelangt über das 6-Wege-Ventil 9 in den Abfall.

Jede einzelne der auf den 18 Fraktioniersäulen gespeicherten Fraktionen wird über eine der sechs Trennsäulen einer Trennsäuleneinheit F weiter aufgetrennt. Dabei wird über die Pumpe 4 und Pumpe 5 der Pumpeinheit B, über das 3-Wege-Ventil 13, das 6-Wege-Ventil 9 und über das entsprechende 4-Wege-Ventil 18.1 bis 18.18 die Komponenten rückwärts von einer der Fraktioniersäulen auf eine der sechs Trennsäulen der Trennsäuleneinheit F gespült und die Komponenten weiter aufgetrennt. Die sechs Trennsäulen werden über entsprechende 4-Wege-Ventile 19.1 bis 19.6 geschaltet.
Die getrennten Komponenten gelangen nach der Trennsäuleneinheit F in ein Split-Ventil 15, wo ein Teil (ca. 1/40) des Volumenstromes einem Lichtstreudetektor 20 zugeführt wird. Der restliche Volumenstrom gelangt über einen weiteren UV-Detektor 21 zu einem T-Stück 22, wo über die Pumpe 2 und ein 3-Wege-Ventil 16 Wasser zum Eluat dosiert und dadurch die Polarität der Lösung erhöht wird. Dieses Eluat gelangt dann zu einer Fraktionssäuleneinheit G, die über zehn 4-Wege-Ventile 24.1 bis 24.10 geschaltet und mit den getrennten Komponenten beschichtet wird, dabei werden durch das Säulenmaterial die Komponenten aus dem Eluat extrahiert. Die Steuerung dieser Ventile erfolgt durch eine Kombination von Peakerkennung der Detektoren 20, 21 und durch Zeitsteuerung.

Die Ventile werden von dem Steuerungsprogramm so gesteuert, daß, wenn die erste Fraktioniersäule beladen ist, mit Hilfe einer Pumpe 26 einer Pumpeinheit D über ein 3-Wege-Ventil 27 Methanol über das entsprechende 4-Wege-Ventil 25.1 auf die erste Fraktioniersäule gefördert wird und die Komponenten über die 3-Wege-Ventile 28, 29, 30 in einen der Fraktionssammler 31, 32, 33 der Fraktionssammlereinheit H gespült werden. Die freigespülte Fraktionierssäule wird mit Wasser über das 3-Wege-Ventil 27 mittels Pumpe 26 und über das entsprechende 4-Wege-Ventil 25.1 für die nächste Fraktionierung konditioniert.

Dadurch können mehr als 10 Fraktionen bearbeitet werden, weil gleichzeitig auf Fraktioniersäulen fraktioniert wird und auch Fraktioniersäulen gespült und konditioniert und damit für eine weitere Fraktionierung vorbereitet werden.

## Patentansprüche

1. Vorrichtung auf HPLC-Basis zur Trennung hochkomplexer Substanzgemische, umfassend
- Trennsäuleneinheiten (A, F)
- Fraktioniersäuleneinheiten (E, G)
- Detektoreinheiten (7, 20, 21)
- Pumpeinheiten (B, C)
- Fraktionssammlereinheiten (H) und
- eine Rechnereinheit für das softwaregesteuerte funktionelle Zusammenwirken der Vorrichtung,
**dadurch gekennzeichnet,**
**daß** die Fraktioniersäulen der Fraktioniersäuleneinheit (E) und die Trennsäulen der Trennsäuleneinheit (F) je ein 4-Wege-Ventil (18.1-18.18 und 19.1-19.6) aufweisen,
**daß** die Fraktioniersäulen der Fraktioniersäuleneinheit (G) je zwei 4-Wege-Ventile (24.1-24.10 und 25.1-25.10) aufweisen und
**daß** die 4-Wege-Ventile (24.1-24.10, 25.1-25.10) der Fraktioniersäuleneinheit (G) mit einer weiteren Pumpeinheit (D) ansteuerbar verbunden sind.

2. Vorrichtung nach Anspruch 1,
**dadurch gekennzeichnet,**
**daß** sie mindestens zwei Trennsäuleneinheiten (A, F) aufweist.

3. Vorrichtung nach Anspruch 1 oder 2,
**dadurch gekennzeichnet, daß** sie mindestens zwei Fraktioniereinheiten (E, G) aufweist.

4. Vorrichtung nach Anspruch 1 oder 2,
**dadurch gekennzeichnet,**
**daß** sie mindestens eine Detektoreinheit (20, 21) aufweist.

5. Vorrichtung nach einem der Ansprüche 1 bis 4,
**dadurch gekennzeichnet,**
**daß** sie mindestens drei Pumpeinheiten (B, C, D) aufweist.

6. Vorrichtung nach einem der Ansprüche 1 bis 5,
**dadurch gekennzeichnet,**
**daß** die Trennsäuleneinheiten (A, F) und Fraktioniersäuleneinheiten (E, G) alternierend angeordnet sind.

7. Vorrichtung nach einem der Ansprüche 1 bis 6,
**dadurch gekennzeichnet,**
**daß** eine Trennsäuleneinheit (A) eine in Reihe geschaltete Aufgabesäule und eine Trennsäule enthält, und die weiteren Trennsäuleneinheiten (F) mindestens zwei Trennsäulen umfassen.

8. Vorrichtung nach einem der Ansprüche 1 bis 6,
**dadurch gekennzeichnet,**
**daß** die Trennsäuleneinheit (A) aus einer Aufgabenschleife und einer Trennsäule besteht.

9. Vorrichtung nach einem der Ansprüche 1 bis 8,
**dadurch gekennzeichnet,**
**daß** mindestens zwei Detektoreinheiten (7, 20, 21) enthalten sind, die zwischen Trennsäuleneinheiten (A, F) und Fraktioniereinheiten (E, G) angeordnet sind.

10. Vorrichtung nach einem der Ansprüche 1 bis 9,
**dadurch gekennzeichnet,**
**daß** sie mindestens eine Detektoreinheit (20, 21) aus einem selektiv und einem nicht selektiv messenden Detektor aufweist.

11. Vorrichtung nach einem der Ansprüche 1 bis 10,
**dadurch gekennzeichnet,**
**daß** die Detektoren UV- und Lichtstreudetektoren sind.

12. Vorrichtung nach einem der Ansprüche 1 bis 10,
**dadurch gekennzeichnet,**
**daß** sie einen massenselektiven Detektor wie ein Massenspektrometer aufweist.

13. Vorrichtung nach einem der Ansprüche 1 bis 12,
**dadurch gekennzeichnet,**
**daß** mindestens drei Pumpeinheiten (B, C, D) enthalten sind, wobei mindestens eine Pumpeinheit (B) mindestens zwei Hochdruckgradientenpumpen (4, 5) aufweist.

14. Vorrichtung nach einem der Ansprüche 1 bis 13,
**dadurch gekennzeichnet,**
**daß** die Pumpeinheiten (B, C, D) über Mehr-Wege-Ventile mit den Fraktioniersäuleneinheiten (E, G) und den Trennsäuleneinheiten (A, F) verbunden sind.

15. Vorrichtung nach einem der Ansprüche 1 bis 14,
**dadurch gekennzeichnet,**
**daß** die Trennsäulen der Trennsäuleneinheiten (A, F) mit Reversed-Phase-Materialien (RP) gefüllt sind.

16. Vorrichtung nach einem der Ansprüche 1 bis 14,
**dadurch gekennzeichnet,**
**daß** die Trennsäulen der Trennsäuleneinheit (A, F) und die Fraktioniersäulen der Fraktioniersäuleneinheiten (E, G) mit Normal- und Reversed-Phase-Materialien gefüllt sind.

17. Vorrichtung nach einem der Ansprüche 1 bis 16,
**dadurch gekennzeichnet,**
**daß** die Trennsäulen und Fraktioniersäulen mit Kieselgel, mit modifizierten Kieselgelen wie RP-2, RP-4, RP-8, RP-18, Amino, Cyano, Phenyl, Diol, Anionenaustauscher und Kationenaustauscher und/oder mit Polymerphasen gefüllt sind.

18. Vorrichtung nach einem der Ansprüche 1 bis 17,
**dadurch gekennzeichnet,**
**daß** die Pumpeinheit (B), die Trennsäuleneinheit (A) und die Fraktioniersäuleneinheit (E) über ein 6-Wege-Ventil (3) ansteuerbar miteinander verbunden sind.

19. Vorrichtung nach einem der Ansprüche 1 bis 18,
**dadurch gekennzeichnet,**
**daß** die Fraktioniersäuleneinheit (E) und die Trennsäuleneinheit (F) über ein 6-Wege-Ventil (9) ansteuerbar miteinander verbunden sind.

20. Verfahren auf HPLC-Basis zur Trennung hochkomplexer Substanzgemische, umfassend die folgenden Stufen
- Gradiententrennung eines hochkomplexen Substanzgemisches in einer ersten Trennsäuleneinheit (A) in eine definierte Anzahl von Fraktionen mittels einer Pumpeinheit (B)
- Erhöhung der Polarität des Eluenten durch Wasserzugabe über eine Pumpeinheit (C)
- Überführung der Fraktionen in eine erste Fraktioniersäuleneinheit (G), deren Säulenanzahl der Anzahl der getrennten Fraktionen entspricht, und Adsorption der vorher aufgetrennten Fraktionen auf je eine Fraktioniersäule durch Festphasenextraktion
- sequenzielles Überspülen der in der ersten Fraktioniersäuleneinheit (E) adsorbierten Fraktionen mit weniger polaren Eluenten in eine zweite Trennsäuleneinheit (F)
- Erhöhung der Polarität des Eluenten durch Wasserzugabe über eine Pumpeinheit (C)
- sequenzielle Überführung der weiter aufgetrennten Fraktionen entsprechend der Signale der Detektoreinheit (20, 21) in eine Fraktioniersäuleneinheit (G) und der Adsorption jeder Fraktion auf eine Fraktioniersäule durch Festphasenextraktion,
**dadurch gekennzeichnet,**
**daß** eine weitere Auftrennung der zweiten Trennsäuleneinheit (F) mit schwachem Gradient mittels der Pumpeinheit (B) erfolgt,
**daß** ein sequenzielles Überspülen der Fraktionen von der Fraktioniersäuleneinheit (G) in die Fraktionssammlereinheit (H) mittels einer Pumpeinheit (D) und eines weniger polaren Eluenten und anschließendem Konditionieren der freigespülten Fraktioniersäule mittels der Pumpeinheit (D)
und **daß** der Transport der mobilen Phase und die zwischenzeitlich erforderlichen Konditionierungsbzw. Äquilibrierungsschritte der einzelnen Säulen in den Trennsäuleneinheiten durch Steuerung der Pumpeinheiten (B, C, D), der Schaltung der Mehr-Wege-Ventile und der Fraktionssammler unter Verarbeitung der Signale der Detektoreinheiten (7 und 20, 21) über eine Rechnereinheit erfolgt.

21. Verfahren nach Anspruch 20,
**dadurch gekennzeichnet,**
**daß** der Zugang der mobilen Phase zu jeder einzelnen Trennsäule der Trennsäuleneinheit (F) und zu jeder einzelnen Fraktioniersäule der Fraktioniersäuleneinheiten (E, G) separat rechnergesteuert über 4-Wege-Ventile durchgeführt wird.

22. Verfahren nach Anspruch 20 oder 21,
**dadurch gekennzeichnet,**
**daß** nach Freispülung einer Fraktioniersäule der Fraktioniersäuleneinheit (G) in einen Fraktionssammler (31, 32, 33) der Fraktionssammlereinheit (H) mittels der Pumpeinheit (D) die Fraktioniersäule mit Wasser für die nächste Fraktionierung konditioniert wird (Roll-over-Betrieb).

23. Verfahren nach einem der Ansprüche 20 bis 22,
**dadurch gekennzeichnet,**
**daß** die Zuführung des hochkomplexen Substanzgemisches zur Vorrichtung über eine Aufgabensäule erfolgt.

24. Verfahren nach Anspruch 23,
**dadurch gekennzeichnet,**
**daß** das hochkomplexe Substanzgemisch mit einem Sorbent vermischt wird, in einem Lösungsmittel wie Methanol suspendiert, danach das Lösungsmittel abgetrennt und der mit dem komplexen Subtanzgemisch beladene Sorbent in die Aufgabensäule gefüllt wird.

25. Verfahren nach einem der Ansprüche 20 bis 24,
**dadurch gekennzeichnet,**
**daß** die Trennung des Substanzgemisches in der Trennsäuleneinheit (A) mit einem Gradient erfolgt, der eine zunehmende Lipophilie aufweist.

26. Verfahren nach einem der Ansprüche 20 bis 25,
**dadurch gekennzeichnet,**
**daß** als Eluenten wäßrige Pufferlösungen und lipophilere Lösungsmittel eingesetzt werden.

27. Verfahren nach einem der Ansprüche 20 bis 26,
**dadurch gekennzeichnet,**
**daß** als lipophilere Lösungsmittel Lösungsmittel wie Acetonitril, Methanol, Tetrahydrofuran und Isopropanol eingesetzt werden.

28. Verfahren nach einem der Ansprüche 20 bis 27,
**dadurch gekennzeichnet,**
**daß** ein Peakerkennungsprogramm eingesetzt wird, das es erlaubt die Anzahl der Fraktionen zu optimieren.

29. Verfahren nach einem der Ansprüche 20 bis 28,
**dadurch gekennzeichnet,**
**daß** in den Säulen der Fraktioniersäuleneinheit (E, G) entsprechend der Polarität der Fraktion unterschiedliche Sorbentien eingesetzt werden.

30. Verfahren nach einem der Ansprüche 20 bis 29,
**dadurch gekennzeichnet,**
**daß** die Freispülung der Fraktioniersäulen im Backflush-Verfahren erfolgt.

## Claims

1. An apparatus, based on HPLC, for separating highly complex mixtures of substances, comprising
- separating columns units (A, F)
- fractionating columns units (E, G)
- detector units (7, 20, 21)
- pump units (B, C)
- fraction collector units (H) and
- a computer unit for the software-controlled functional collaboration of the apparatus,
**characterized in that** the fractionating columns of the fractionating columns unit (E) and the separating columns of the separating columns unit (F) each have a 4-way valve (18.1 - 18.18 and 19.1 - 19.6), that the fractionating columns of the fractionating columns unit (G) each have two 4-way valves (24.1 - 24.10 and 25.1 - 25.10) and that the 4-way valves (24.1 - 24.10, 25.1 - 25.10) of the fractionating columns unit (G) are connected selectably with a further pumping unit (D).

2. The apparatus of claim 1, **characterized in that** it has at least two separating column units (A, F).

3. The apparatus of claims 1 or 2, **characterized in that** it has at least two fractionation units (E, G).

4. The apparatus of claims 1 or 2, **characterized in that** it has at least one detector unit (20, 21).

5. The apparatus of one of the claims 1 to 4, **characterized in that** it has at least three pump units (B, C, D).

6. The apparatus of one of the claims 1 to 5, **characterized in that** the separating columns units (A, F) and fractionating column units (E, G) are disposed alternately.

7. The apparatus of one of the claims 1 to 6, **characterized in that** a separating columns unit (A) contains a feeding column and a separating column, connected in series, and the further separating column units (F) comprise at least two separating columns.

8. The apparatus of one of the claims 1 to 6, **characterized in that** the separating columns unit (A) consists of a feeding loop and a separating column.

9. The apparatus of one of the claims 1 to 8, **characterized in that** at least two detector units (7, 20, 21) are contained, which are disposed between separating column units (A, F) and fractionating units (E, G).

10. The apparatus of one of the claims 1 to 9, **characterized in that** it has at least one detector unit (20, 21) comprising a detector that is selective and a detector that is not selective.

11. The apparatus of one of the claims 1 to 10, **characterized in that** the detectors are UV and light-scattering detectors.

12. The apparatus of one of the claims 1 to 10, **characterized in that** it has a mass-selective detector, such as a mass spectrometer.

13. The apparatus of one of the claims 1 to 12, **characterized in that** at least three pumping units (B, C, D) are contained, at least one pumping unit (B) having at least two high pressure gradient pumps (4, 5).

14. The apparatus of one of the claims 1 to 13, **characterized in that** the pumping units (B, C, D) are connected over multi-way valves with the fractionating column units (E, G) and the separating columns units (A, F.

15. The apparatus of one of the claims 1 to 14, **characterized in that** the separating columns of the separating column units (A, F) are filled with reverse phase materials (RP).

16. The apparatus of one of the claims 1 to 14, **characterized in that** the separating columns of the separating columns units (A, F) and the fractionating columns of the fractionating columns unit (E, G) are filled with normal and reverse phase materials.

17. The apparatus of one of the claims 1 to 16, **characterized in that** the separating columns and fractionating columns are filled with silica gel, with modified silica gels such as RP-2, RP-4, RP-8, RP-18, amino, cyano, phenyl, diol, anion exchanges and cation exchanges and/or with polymer phases.

18. The apparatus of one of the claims 1 to 17, **characterized in that** the pumping unit (B), the separating columns unit (A) and the fractionating columns unit (E) are selectably connected with one another over a 6-way valve (3).

19. The apparatus of one of the claims 1 to 18, **characterized in that** the fractionating columns unit (E) and the separating columns unit (F) are connected controllably with one another over a 6-way valve (9).

20. An HPLC-based method for separating highly complex mixtures of substances, comprising the following steps:
- gradient separation of a highly complex mixture of substances in a first separating columns unit (A) into a defined number of fractions by means of a pump unit (B)
- increasing the polarity of the eluant by the addition of water by means of a pumping unit (C)
- transferring the fractions to a first fractionating columns unit (G), the number of columns of which corresponds to the number of separated fractions, and absorbing the previously separating fractions on a fractionating column each by solid phase extraction
- sequentially flushing the fractions, absorbed in the first fractionating columns unit (E), with less polar eluants into a second separating columns unit (F)
- increasing the polarity of the eluant by adding water over a pumping unit (C)
- sequentially transferring the fractions, which have been separated further, in accordance with the signals of the detector unit (20, 21) into a fractionating columns unit (G) and absorbing each fraction on a fractionating column by solid phase extraction,
**characterized in that** there is a further fractionation of the second separating columns unit (F) with the weak gradient by means of the pump unit (B), that there is a sequential flushing of the fractions from the fractionating columns unit (G) into the fraction collector unit (H) by means of a pump unit (D) and a less polar eluant and a subsequent conditioning of the fractionating column, flushed clean, by means of the pump unit (D), and that there is transport of the mobile phase and there are conditioning steps or equilibrating steps of the individual columns in the separating columns unit, which are required in the interim, by controlling the pump units (B, C, D), by switching the multi-way valves and controlling the fraction collector while processing the signals of the detector units (7 and 20, 21) using a computer unit.

21. The method of claim 20, **characterized in that** the addition of the mobile phase to each individual separating column of the separating columns unit (F) and each individual fractionating column of the fractionating columns units (E, G) is carried out separately, under the control of a computer, over 4-way valves.

22. The method of claims 20 or 21, **characterized in that**, after a fractionating column of the fractionating columns unit (G) in a fraction collector (31, 32, 33) of the fraction collector unit (H) is flushed to clean it by means of the pump unit (D), the fractionating column is conditioned for the next fractionation (rollover-operation).

23. The method of claims 20 to 22, **characterized in that** the highly complex mixture of substances is supplied to the apparatus over a supplying column.

24. The method of claim 23, **characterized in that** the highly complex mixture of substances is mixed with an adsorbent and suspended in a solvent such as methanol, after which the solvent is removed and the adsorbent, charged with the complex mixture of substances, is filled into the supplying column:

25. The method of claims 20 to 24, **characterized in that** the separation of the mixture of substances in the separating columns unit (A) is accomplished with a gradient of increasing lipophilicity.

26. The method of claims 20 to 25, **characterized in that** aqueous buffer solutions and lipophilic solvents are used as eluants.

27. The method of one of the claims 20 to 26, **characterized in that** solvents such as acetonitrile, methanol, tetrahydrofuran and isopropanol are used as lipophilic solvents.

28. The method of claims 20 to 27, **characterized in that** a peak identification program is used, which permits the number of fractions to be optimized.

29. The method of one of the claims 20 to 28, **characterized in that** different adsorbents, corresponding to the polarity of the fraction, are used in the columns of the fractionating columns unit (E, G).

30. The method of claims 20 to 29, **characterized in that** the fractionating columns are cleaned by back flushing.

## Revendications

1. Dispositif à base HPLC pour la séparation de mélanges de substances hautement complexes, comprenant
- des unités à colonnes de séparation (A, F)
- des unités à colonnes de fractionnement (E, G)
- des unités à détecteurs (7, 20, 21)
- des unités à pompes (B, C)
- des unités à collecteurs de fractionnement (H)
- et une unité à calculateur pour le fonctionnement général du dispositif commandé par logiciel,
**caractérisé en ce que**
les colonnes de fractionnement de l'unité à colonnes de fractionnement (E) et les colonnes de séparation de l'unité à colonnes de séparation (F) présentent chacune un distributeur à 4 voies (18.1-18.18 et 19.1-19.6),
que les colonnes de fractionnement de l'unité à colonnes de fractionnement (G) présentent chacune deux distributeurs à 4 voies (24.1-24.10 et 25.1-25-10),
et **en ce que** les distributeurs à 4 voies (24.1-24.10, 25.1-25-10) de l'unité à colonnes de fractionnement (G) sont reliées à une autre unité à pompes (D) de manière à pouvoir être commandés.

2. Dispositif selon revendication 1,
**caractérisé en ce qu'**
il présente au moins deux unités à colonnes de séparation (A, F).

3. Dispositif selon revendication 1 ou 2,
**caractérisé en ce qu'**
il présente au moins deux unités de fractionnement (E, G).

4. Dispositif selon revendication 1 ou 2,
**caractérisé en ce qu'**
il présente au moins une unité à détecteurs (20, 21).

5. Dispositif selon l'une des revendications 1 à 4,
**caractérisé en ce qu'**
il présente au moins trois unités à pompes (B, C, D).

6. Dispositif selon l'une des revendications 1 à 4,
**caractérisé en ce que**
les unités à colonnes de séparation (A, F) et les unités à colonnes de fractionnement (E, G) sont disposées en alternance.

7. Dispositif selon l'une des revendications 1 à 6,
**caractérisé en ce qu'**
une unité à colonnes de séparation (A) comprend une colonne de charge montée en ligne et une colonne de séparation, et **en ce que** les autres unités à colonnes de séparation (F) comprennent au moins deux colonnes de séparation.

8. Dispositif selon l'une des revendications 1 à 6,
**caractérisé en ce que**
l'unité à colonnes de séparation (A) consiste en une boucle de charge et une colonne de séparation.

9. Dispositif selon l'une des revendications 1 à 8,
**caractérisé en ce qu'**
au moins deux unités à détecteurs (7, 20, 21) sont contenues, disposées entre les unités à colonnes de séparation (A, F) et les unités de fractionnement (E, G).

10. Dispositif selon l'une des revendications 1 à 9,
**caractérisé en ce qu'**
il présente au moins une unité à détecteurs (20, 21) composée d'un détecteur de mesure sélectif et d'un détecteur de mesure non sélectif.

11. Dispositif selon l'une des revendications 1 à 10,
**caractérisé en ce que**
les détecteurs sont des détecteurs à UV et à dispersion de lumière.

12. Dispositif selon l'une des revendications 1 à 10,
**caractérisé en ce qu'**
il présente un détecteur sélectif de masse tel que spectromètre de masse.

13. Dispositif selon l'une des revendications 1 à 12,
**caractérisé en ce qu'**
au moins trois unités à pompes (B, C, D) sont contenues, une unité à pompes (B) présentant au moins deux pompes à gradients de haute pression (4, 5).

14. Dispositif selon l'une des revendications 1 à 13,
**caractérisé en ce que**
les unités à pompes (B, C, D) sont reliées aux unités à colonnes de fractionnement (E, G) et aux unités à colonnes de séparation (A, F) par l'intermédiaire de distributeurs à plusieurs voies.

15. Dispositif selon l'une des revendications 1 à 14,
**caractérisé en ce que**
les colonnes de séparation des unités à colonnes de séparation (A, F) sont remplies de matières à phase inversée (*reversed phase,* RP).

16. Dispositif selon l'une des revendications 1 à 14,
**caractérisé en ce que**
les colonnes de séparation de l'unité à colonnes de séparation (A, F) et les colonnes de fractionnement de l'unité à colonnes de fractionnement (E, G) sont remplies de matières à phase normale et à phase inversée.

17. Dispositif selon l'une des revendications 1 à 16,
**caractérisé en ce que**
les colonnes de séparation et les colonnes de fractionnement sont remplies de gel de silice, de gels de silice modifiés tels que RP-2, RP-4, RP-8, RP-18, d'échangeur d'amines, de cyanogènes, de phényles, de diols, d'anions et d'échangeurs de cations et/ou de phases polymères.

18. Dispositif selon l'une des revendications 1 à 17,
**caractérisé en ce que**
l'unité à pompes (B), l'unité à colonnes de séparation (A) et l'unité à colonnes de fractionnement (E) sont reliées entre elles par un distributeur à 6 voies (3) de manière à pouvoir être commandées.

19. Dispositif selon l'une des revendications 1 à 18,
**caractérisé en ce que**
l'unité à colonnes de fractionnement (E) et l'unité à colonnes de séparation (F) sont reliées entre elles par un distributeur à 6 voies (9) de manière à pouvoir être commandées.

20. Procédé à base HPLC pour la séparation de mélanges de substances hautement complexes, comportant les étapes suivantes :
- séparation par gradients d'un mélange de substances hautement complexe dans une première unité à colonnes de séparation (A), en un nombre défini de fractions au moyen d'une unité à pompes (B)
- élévation de polarité de l'éluant par addition d'eau au moyen d'une unité à pompes (C)
- transport des fractions vers une première unité à colonnes de fractionnement (G) dont le nombre de colonnes correspond au nombre de fractions séparées, et adsorption des fractions précédemment séparées dans une colonne de fractionnement chacune par extraction de phase solide
- transport séquentiel des fractions adsorbées avec moins d'éluants polaires dans la première unité à colonnes de fractionnement (E) vers une seconde unité à colonnes de séparation (F)
- élévation de polarité de l'éluant par addition d'eau au moyen d'une unité à pompes (C)
- transport séquentiel vers une unité à colonnes de fractionnement (G) des fractions reséparées en fonction des signaux de l'unité à détecteurs (20, 21), et de l'adsorption de chaque fraction vers une colonne de fractionnement par extraction de phase solide,
**caractérisé en ce qu'**
une re-séparation de la seconde unité à colonnes de séparation (F) a lieu avec un faible gradient au moyen de l'unité à pompes (B),
qu'ont lieu un transport séquentiel des fractions de l'unité à colonnes de fractionnement (G) vers l'unité à collecteurs de fractions (H) au moyen d'une unité à pompes (D) et d'un éluant moins polaire, et un conditionnement consécutif de la colonne de fractionnement libérée au moyen de l'unité à pompes (D),
et **en ce que** le transport de la phase mobile et les étapes intermédiaires nécessitées de conditionnement ou d'équilibrage des différentes colonnes ont lieu dans les unités à colonnes de séparation par commande des unités à pompes (B, C, D), du circuit des distributeurs à plusieurs voies et des collecteurs de fractions en traitant les signaux des unités à détecteurs (7 et 20, 21) au moyen d'une unité à calculateur.

21. Procédé selon revendication 20,
**caractérisé en ce que**
le passage de la phase mobile dans chaque colonne de séparation distincte de l'unité à colonnes de séparation (F) et dans chaque colonne de fractionnement distincte de l'unité à colonnes de fractionnement (E, G) sont séparément exécutés par distributeurs à 4 voies commandés par calculateur.

22. Procédé selon revendication 20 ou 21,
**caractérisé en ce qu'**
après libération d'une colonne de fractionnement de l'unité à colonnes de fractionnement (G) vers un collecteur de fractions (31, 32, 33) de l'unité à collecteurs de fractions (H) au moyen de l'unité à pompes (D), la colonne de fractionnement est conditionnée avec de l'eau pour le fractionnement suivant (service *roll-over*).

23. Dispositif selon l'une des revendications 20 à 22,
**caractérisé en ce que**
le transport du mélange de substances hautement complexe vers le dispositif a lieu au moyen d'une colonne de charge.

24. Dispositif selon revendication 23,
**caractérisé en ce que**
le mélange de substances hautement complexe est mélangé à un sorbant, suspendu dans un agent solvant tel que le méthanol, le mélange solvant étant ensuite séparé et le sorbant chargé du mélange de substances complexe versé dans la colonne de charge.

25. Procédé selon l'une des revendications 20 à 24,
**caractérisé en ce que**
la séparation du mélange de substances dans l'unité à colonnes de séparation (A) a lieu avec un gradient présentant une lipophilie croissante.

26. Procédé selon l'une des revendications 20 à 25,
**caractérisé en ce que**
des solutions-tampon aqueuses et des agents solvants plus lipophiles sont utilisés comme éluants.

27. Procédé selon l'une des revendications 20 à 26,
**caractérisé en ce que**
des agents solvants tels qu'acétonitrile, méthanol, tétrahydrofurane et isopropanol sont utilisés comme agents solvants plus lipophiles.

28. Procédé selon l'une des revendications 20 à 27,
**caractérisé en ce qu'**
un programme de détections de pointes est utilisé, permettant d'optimiser le nombre des fractions.

29. Procédé selon l'une des revendications 20 à 28,
**caractérisé en ce que**
différents sorbants sont utilisés dans les colonnes de l'unité à colonnes de fractionnement (E, G) en fonction de la polarité de la fraction.

30. Procédé selon l'une des revendications 20 à 29,
**caractérisé en ce que**
la libération des colonnes à fractionnement est effectuée par procédé *back-flush.*
